## Europäisches Patentamt

## European Patent Office

## Office européen des brevets

(19)

(11) Veröffentlichungsnummer: **0 131 731**
**B1**

(12)

# EUROPÄISCHE PATENTSCHRIFT

(45) Veröffentlichungstag der Patentschrift:
08.03.89

(51) Int. Cl.⁴: **G 01 N 27/12**

(21) Anmeldenummer: 84106360.5

(22) Anmeldetag: 04.06.84

(54) Dünnschicht-Gassensor zum Nachweis und zur Messung von gasförmigen Kohlenwasserstoff-Verunreinigungen mit Doppel- und Dreifachbindungen, insbesondere von Acetylen, in Luft sowie ein Verfahren zu seiner Herstellung.

(30) Priorität: 22.06.83 DE 3322481

(43) Veröffentlichungstag der Anmeldung:
23.01.85 Patentblatt 85/4

(45) Bekanntmachung des Hinweises auf die Patenterteilung:
08.03.89 Patentblatt 89/10

(84) Benannte Vertragsstaaten:
AT DE FR NL

(56) Entgegenhaltungen:
EP-A-0 024 679
EP-A-0 046 989
US-A-3 479 257

(73) Patentinhaber: Siemens Aktiengesellschaft Berlin und München, Wittelsbacherplatz 2, D-8000 München 2 (DE)

(72) Erfinder: Voit, Helmut, Dipl.- Phys., Plievierpark 16, D-8000 München 83 (DE)

EP 0 131 731 B1

## Beschreibung

Die vorliegende Patentanmeldung betrifft einen Dünnschicht-Gassensor hoher Empfindlichkeit und Stabilität zum Nachweis und zur Messung von gasförmigen Kohlenwasserstoff-Verunreinigungen mit Doppel- und mit Dreifachbindungen, insbesondere von Acetylen, in Luft auf der Basis von halbleitendem Wolframoxid auf Substraten aus Isolatormaterialien, bei dem der elektrische Widerstand der Wolframoxidschicht in Abhängigkeit von der Art und Konzentration des zu detektierenden Gases gemessen wird, sowie ein Verfahren zu seiner Herstellung.

Aufgrund des Funktionsprinzips von Gassensoren auf der Basis Halbleitermetalloxide ist eine echte Selektivität für ein bestimmtes Gas schwierig. Dazu muß auf andere Meßverfahren, z. B. die Gaschromatographie oder die IR-Absorption, zurückgegriffen werden. Diese Meßmethoden bedingen in jedem Fall einen weitaus größeren Kosten- und Zeitaufwand. Soll jedoch ein Gassensor nur in Warn- und Meßgeräten geringerer Genauigkeit zur Überwachung des Auftretens unerwünschter oder gefährlicher Gase eingesetzt werden, so haben die Metalloxid-Gassensoren eindeutig Vorteile, weil sie an vielen Meßstellen ohne großen Aufwand angebracht und gleichzeitig überwacht werden können.

Je nach Präparation, Materialauswahl und der verschiedenen Zusätze, sowie ihrer Betriebstemperatur erzielt man mit Metalloxid-Gassensoren verschiedene Empfindlichkeiten für verschiedene Gase.

Ein Gassensor der eingangs genannten Art ist beispielsweise aus der europäischen Patentanmeldung 0 046 989 zu entnehmen und ist zum Nachweis und zur Messung von gasförmigen Kohlenstoffwasserstoff-Verunreinigungen in der Luft einsetzbar. Mit diesem Gassensor auf der Basis von halbleitendem Wolframoxid auf Substraten aus Quarzglas, oxidiertem Silizium oder Keramik werden ganz allgemein kohlenwasserstoffhaltige Gase wie Methan, Propan, Butan, Äthylen, Acetylen und auch Wasserstoff detektiert. Eine besondere Empfindlichkeit für spezielle Kohlenwasserstoffverbindungen konnte nicht festgestellt werden.

Es ist Aufgabe der vorliegenden Erfindung, einen Dünnschicht-Gassensor der eingangs genannten Art anzugeben, der speziell für aus gasförmigen Kohlenwasserstoffverbindungen mit Doppel- und Dreifachbindung bestehenden Verunreinigungen, wie insbesondere Acetylen, in Luft anwendbar ist.

Weiterhin ist es Aufgabe der Erfindung, ein Verfahren zu seiner Herstellung anzugeben.

Diese Aufgabe wird gemäß dem Anspruch 1 durch einen Dünnschicht-Gassensor auf der Basis von Wolframoxid-Halbleitern der dadurch gekennzeichnet ist, daß das Substrat aus einem Lithiumniobateinkristall (LiNbO$_3$) besteht und die Wolframoxid-Dünnschicht auf dem Substrat durch reaktives HF-Sputtern erzeugt ist und durch das Verfahren gemäß dem Anspruch 6 gelöst.

Vorzugsweise besteht das Substrat aus einem in (001)-Richtung orientierten Lithiumniobateinkristall.

Die Wolframoxiddünnschicht, deren Dicke im Bereich von 100 bis 1000 nm liegt, wird auf dem einkristallinen Lithiumniobatsubstrat durch reaktives HF-Sputtern von einem metallischen Wolfram-Target in einer Inertgasatmosphäre mit einem Sauerstoffanteil von 1 bis 10 % bei einer Substrattemperatur von 400° C mit einer Sputterrate von 10 nm/min hergestellt. Durch thermische Nachbehandlung mit Sauerstoff bei 600° C während einer Zeitdauer von 100 Stunden wird eine gute Kristallinität und Haftfestigkeit der Schicht erreicht. Die Wolframoxiddünnschicht kann durch ein Edelmetall, vorzugsweise Platin, oder ein Metalloxid aktiviert werden, wobei die Aktivatorschicht keine größeren zusammenhängenden Bereiche der Oberfläche bedeckt, den Gesamtleitwert nicht beeinflußt und keine direkte Verbindung mit den Meßkontakten hat.

Durch die Erfindung wird ein Gassensor geschaffen, der sehr empfindlich und schnell auf Acetylen (C$_2$H$_2$) mit seiner Dreifachbindung, weniger empfindlich auf Kohlenwasserstoffe mit Doppelbindungen und praktisch gar nicht auf Methan oder seine Homologen anspricht

Für den Anzeigeprozeß sind Adsorptions und Katalysatorvorgänge mitbestimmend. Es ist bekannt, daß diese Oberflächenprozesse stark von der Struktur und Orientierung des Adsorbers abhängig sind. Die Struktur von Wolframoxid (WO$_3$) läßt sich aus der Perowskitstruktur ABO$_3$ ableiten, wobei die A-Plätze unbesetzt bleiben; die B-Kationen (hier Wolfram) sind oktaedrisch von Sauerstoffionen umgeben; die WO$_6$-Oktaeder sind über Ecken verknüpft. Die Realstruktur von WO$_3$ hat aufgrund von Verzerrungen und gegenseitigen Verkippungen dieser Oktaeder keine kubische Symmetrie mehr, die Abweichungen der Winkel und Längen von den kubischen Idealwerten sind jedoch nur gering. Eine gemittelte "kubische" Gitterkonstante der triklinen bzw. monoklinen WO$_3$-Modifikation beträgt etwa 3,7 Å bis 3,8 Å. (10 Å = 1 nm).

Auch die Lithiumniobat-Struktur läßt sich analog mittels eckenverknüpfter Oktaeder, hier NbO$_6$-Oktaeder, beschreiben. Die dabei entstehende pseudokubische rhomboedrische Elementarzelle hat bei acht Formeleinheiten pro Elementarzelle eine Gitterkonstante von 7,532 Å (siehe A. Räuber, Chemistry and Physics of Lithium Niobate, in: E. Kaldis (Ed.), Current Topics in Materials Science, Vol. 1, North Holland Publishing Company, 1978). In der auch bei WO$_3$ verwendeten idealisierten kubischen Beschreibung mit einer Formeleinheit pro Elementarzelle entspricht dies einer Gitterkonstante von 3,766 Å. Somit ist unter

geeigneten Herstellungsbedingungen ein geordnetes Aufwachsen von $WO_3$-Schichten auf $LiNbO_3$-Substraten zu erwarten.

Die Herstellung der $WO_3$-Schichten und der Gassensor-Anordnung ist in der eingangs genannten europäischen Patentanmeldung 0 046 989 eingehend beschrieben. Manerhält eine speziell auf Acetylen ansprechende Dünnschicht, wenn die Substrattemperatur auf 400°C und die Dicke der Schicht auf 200 nm eingestellt wird.

Röntgenbeugungsuntersuchungen bestätigen, daß die Schichten hochgeordnet auf dem $LiNbO_3$ aufwachsen. Es ist nur der (001)-Reflex von $WO_3$ meßbar; (001) von $LiNbO_3$ ist aufgrund eines Auslöschungsgesetzes nicht vorhanden, der erste Einkristallreflex vom Substrat ist (002).

Die Schichten sind sehr hochohmig; bis zu Temperaturen von 400°C konnten bei einer angelegten Spannung von 1 V der Frequenz 35 Hz nur Ströme von < 10 nA an Luft gemessen werden. Erst bei höheren Temperaturen steigt die Leitfähigkeit merklich an.

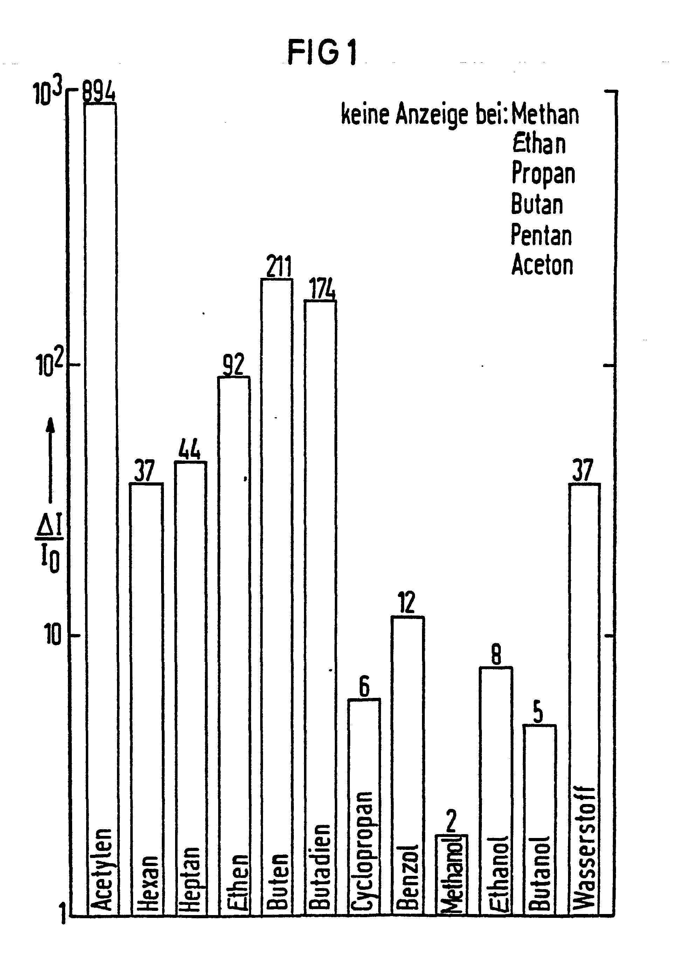

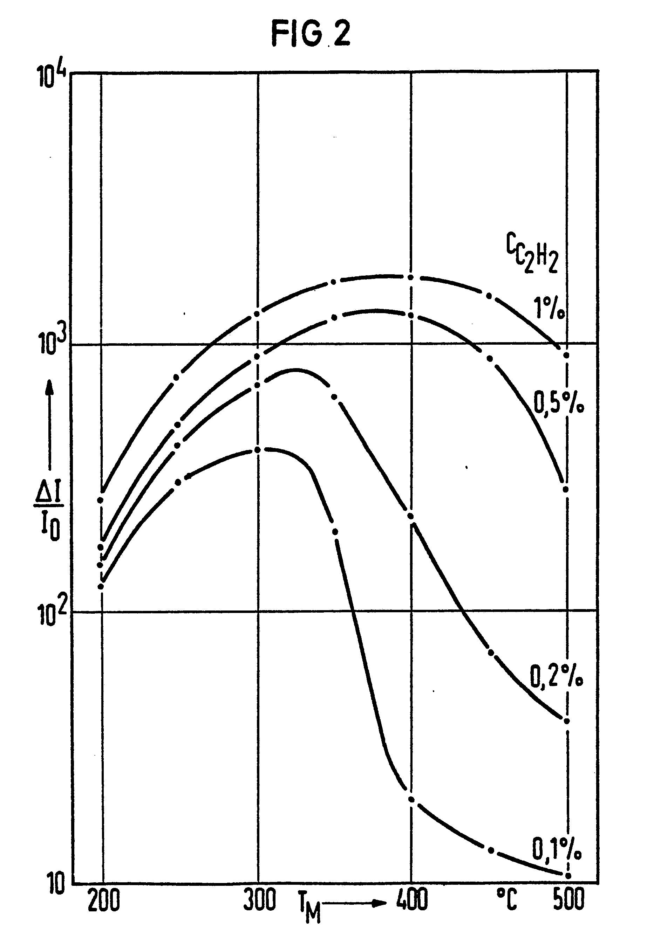

Weitere Einzelheiten über die Funktionsweise der erfindungsgemäßen Anordnung ($WO_3$ auf $LiNbO_3$ (001)) werden nachfolgend anhand der Figuren 1 und 2 erklärt. Dabei zeigt die Figur 1 die Empfindlichkeit, definiert als relative Stromänderung $\frac{\Delta I}{I_o}$ gegen verschiedene Gase bei einer Meßtemperatur $T_M$ = 300°C. Die Meßgaskonzentration betrug 0,2 %. Die Figur 2 zeigt die Empfindlichkeit $\frac{\Delta I}{I_o}$ gegen Acetylen in Abhängigkeit von der Meßtemperatur $T_M$. Die angelegte Spannung $U_{eff}$ = 1 V; die Frequenz f = 35 Hz.

Figur 1: Bringt man verschiedene gasförmige Kohlenwasserstoffe in die Sensorumgebung, so ergeben sich deutliche Unterschiede zu Proben, die mit amorphen Substratmaterial hergestellt wurden. Gesättigte Kohlenwasserstoffe (nur Einfachbindung!) werden bei 300 bis 400°C überhaupt nicht oder nur sehr schwach angezeigt. Ganz im Gegensatz zu den bekannten $WO_3$-Dünnschicht-Sensoren, die z. B. sehr hohe Empfindlichkeit für Butan zeigen. Kohlenwasserstoffe mit Doppel- oder Dreifachbindungen werden dagegen sehr empfindlich und schnell angezeigt. Auch gegen Alkohole und organische Lösungsmittel sind die erfindungsgemäßen Schichten nur wenig empfindlich. Wie aus Figur 1 ersichtlich ist, spricht Wasserstoff, der von allen bisher untersuchten Sensoren äußerst empfindlich nachgewiesen Verden konnte (Empfindlichkeiten meist > 10 000 für eine Wasserstoffkonzentration von 0,2 %!) nur schwach an.

Figur 2: Als technisch wichtiger Kohlenwasserstoff wurde Acetylen (Ethin, HC≡CH) in seinem Einfluß auf die $WO_3$-Schichten genauer untersucht. Die Figur zeigt den Temperaturverlauf der Empfindlichkeit $\frac{\Delta I}{I_o}$ für verschiedene Meßgaskonzentrationen; die "wahren" Empfindlichkeiten liegen sicher noch höher, da in dem sehr niedrigen Grundstrom $I_o$ ein Teil von Isolationsströmen und Einstreuungen enthalten ist. Bei 300°C liegen die Ansprech- und Abfallzeiten im Sekundenbereich. Ganz im Gegensatz zu den Sensoren auf amorphem Substrat wird keine Vergiftung durch eine schwefelhaltige Verbindung, wie z. B. Tetrahydrothiophen, beobachtet.

## Patentansprüche

1. Dünnschicht-Gassensor hoher Empfindlichkeit und Stabilität zum Nachweis und zur Messung von gasförmigen Kohlenwasserstoff-Verunreinigungen mit Doppel- und mit Dreifachbindungen, insbesondere von Acetylen, in Luft auf der Basis von halbleitendem Wolframoxid auf Substraten aus Isolatormaterialien, bei dem der elektrische Widerstand der Wolframoxidschicht in Abhängigkeit von der Art und Konzentration des zu detektierenden Gases gemessen wird, dadurch gekennzeichnet, daß das Substrat aus einem Lithiumniobateinkristall ($LiNbO_3$) besteht und die Wolframoxid-Dünnschicht auf dem Substrat durch reaktives HF-Sputtern erzeugt ist.

2. Dünnschicht-Gassensor nach Anspruch 1, dadurch gekennzeichnet, daß das Substrat aus einem in (001)-Richtung orientierten Lithiumniobateinkristall besteht.

3. Dünnschicht-Gassensor nach Anspruch 1 oder 2, dadurch gekennzeichnet, daß die Schichtdicke der aufgesputterten Wolframoxidschicht im Bereich von 100 nm bis 1000 nm liegt.

4. Dünnschicht-Gassensor nach einem der Ansprüche 1 bis 3, dadurch gekennzeichnet, daß die Wolframoxid-Dünnschicht durch ein Edelmetall oder ein Metalloxid aktiviert ist, wobei die Aktivatorschicht keine größeren zusammenhängenden Bereiche der Oberfläche bedeckt, den Gesamtleitwert nicht beeinflußt und keine direkte Verbindung mit den Meßkontakten hat.

5. Dünnschicht-Gassensor nach Anspruch 4, dadurch gekennzeichnet, daß das Aktivatormetall aus Platin besteht.

6. Verfahren zum Herstellen eines Dünnschicht-Gassensors zum Nachweis von Acetylen in Luft nach einem der Ansprüche 1 bis 5, dadurch gekennzeichnet, daß die Wolframoxidschicht auf der vorzugsweise in (001)-Richtung orientierten Lithiumniobateinkristall-Scheibe als Substrat durch reaktives HF-Sputtern von einem metallischen Wolfram-Target in einer Inertgasatmosphäre mit einem Anteil an Sauerstoff von 1 bis 10 % bei einer Substrattemperatur von 400°C mit einer Sputtrate von 10 nm/min hergestellt wird.

7. Verfahren nach Anspruch 6, dadurch gekennzeichnet, daß das Substrat mit der aufgesputterten Dünnschicht bei 600°C 100 Stunden in Sauerstoff getempert wird.

## Claims

1. Thin-film gas sensor of high sensitivity and stability for detecting and measuring gaseous hydrocarbon contaminants containing double and triple bonds, in particular acetylene, in air on the bas is of semiconducting tungsten oxide on substrates made from insulator materials, in which sensor the electrical resistance of the tungsten oxide film is measured as a function of the type and concentration of the gases to be detected, characterized in that the substrate comprises a lithium niobate monocrystal ($LiNbO_3$) and the thin tungsten oxide film is produced on the substrate by reactive HF sputtering.

2. Thin-film gas sensor according to Claim 1, characterized in that the substrate comprises a lithium niobate monocrystal oriented in the (001) direction.

3. Thin-film gas sensor according to Claim 1 or 2, characterized in that the film thickness of the sputtered- on tungsten oxide film is in the range 100 nm to 1000 nm.

4. Thin-film gas sensor according to one of Claims 1 to 3, characterized in that the thin tungsten oxide film has been activated by a noble metal or a metal oxide, where the activator film does not cover any relatively large coherent areas of the surface, does not affect the overall conductivity and is not connected directly to the measurement contacts.

5. Thin-film gas sensor according to Claim 4, characterized in that the activator metal comprises platinum.

6. Process for the product ion of a thin-film gas sensor for detecting acetylene in air according to one of Claims 1 to 5, characterized in that the tungsten oxide film is produced on the lithium niobate monocrystal disc, preferably oriented in the (001) direction, as substrate by reactive HF sputtering of a metallic tungsten target in an inert gas atmosphere containing 1 to 10 % of oxygen at a substrate temperature of 400°C at a sputtering rate of 10 nm/min.

7. Process according to Claim 6, characterized in that the substrate is heated at 600°C for 100 hours in oxygen together with the sputtered-on thin film.

## Revendications

1. Détecteur de gaz à couche mince de grande sensibilité et stabilité, pour détecter et pour mesurer des impuretés gazeuses à base d'hydrocarbures ayant des doubles liaisons et des triples liaisons, notamment l'acétylène, dans l'air, à base d'oxyde de tungstène semiconducteur, sur des substrats en matériaux isolants, dans lequel on mesure la résistance électrique de la couche d'oxyde de tungstène en fonction de la nature et de la concentration du gaz à détecter, caractérisé en ce que le substrat est un monocristal de niobate de lithium ($LiNbO_3$) et la couche mince d'oxyde de tungstène sur le substrat est obtenue par pulvérisation cathodique HF réactive.

2. Détecteur de gaz à couche mince suivant la revendication 1, caractérisé en ce que le substrat est un monocristal de niobate de lithium orienté dans la direction (001).

3. Détecteur de gaz à couche mince suivant la revendication 1 ou 2, caractérisé en ce que l'épaisseur de la couche d'oxyde de tungstène, déposée par pulvérisation cathodique, est de l'ordre de 100 nm à 1000 nm.

4. Détecteur de gaz à couche mince suivant l'une des revendications 1 à 3, caractérisé en ce que la couche mince d'oxyde de tungstène est activée par un métal précieux ou par un oxyde métallique, la couche d'activateur ne recouvrant pas de grandes parties d'un seul tenant de la surface, n'influant pas la valeur globale de la conductibilité et n'ayant pas de contact direct avec les contacts de mesure.

5. Détecteur de gaz à couche mince suivant la revendication 4, caractérisé en ce que le métal servant d'activateur est du platine.

6. Procédé de fabrication d'un détecteur de gaz à couche mince pour détecter l'acétylène dans l'air suivant l'une des revendications 1 à 5, caractérisé en ce qu'il consiste à préparer la couche d'oxyde de tungstène sur le disque, servant de substrat et constitué d'un monocristal de niobate de lithium orienté de préférence dans la direction (001), par pulvérisation cathodique HF réactive d'une cible en tungstène métallique, dans une atmosphère de gaz inerte, avec une proportion d'oxygène de 1 à 10 %, en opérant à une température du substrat de 400°C et avec une vitesse de pulvérisation cathodique de 10 nm/mn.

7. Procédé suivant la revendication 6, caractérisé en ce qu'il consiste à faire subir une trempe au substrat, avec la couche mince déposée par pulvérisation cathodique, dans l'oxygène pendant 100 heures à 600°C.

# FIG 1

keine Anzeige bei: Methan
Ethan
Propan
Butan
Pentan
Aceton

$\frac{\Delta I}{I_0}$

Acetylen 894
Hexan 37
Heptan 44
Ethen 92
Buten 211
Butadien 174
Cyclopropan 6
Benzol 12
Methanol 2
Ethanol 8
Butanol 5
Wasserstoff 37

FIG 2